# EUROPÄISCHE PATENTSCHRIFT

(11) **EP 1 427 571 B1**
(45) Veröffentlichungstag und Bekanntmachung des Hinweises auf die Patenterteilung: **07.05.2008**
(21) Anmeldenummer: 02774598.3
(22) Anmeldetag: 11.09.2002
(51) Int. Cl.: B25B 29/02, B23P 19/06

(54) **HYDRAULISCHE GEWINDEBOLZENSPANNVORRICHTUNG UND VERFAHREN ZUM ANZIEHEN VON GROSSEN SCHRAUBVERBINDUNGEN MITTELS DER HYDRAULISCHEN GEWINDEBOLZENSPANNVORRICHTUNG**
HYDRAULIC THREADED BOLT TIGHTENING DEVICE AND METHOD FOR TIGHTENING LARGE BOLT CONNECTIONS BY USING THE HYDRAULIC THREADED BOLT TIGHTENING DEVICE
DISPOSITIF DE SERRAGE HYDRAULIQUE A BOULON FILETE ET PROCEDE POUR SERRER DE GROS RACCORDS A VIS A L'AIDE DE CE DISPOSITIF HYDRAULIQUE DE SERRAGE A BOULON FILETE

(30) Priorität: 17.09.2001 DE 10145847
(43) Veröffentlichungstag der Anmeldung: 16.06.2004
(73) Patentinhaber: Hohmann, Jörg, 59872 Meschede (DE); Hohmann, Frank, 59581 Warstein (DE)
(72) Erfinder: Hohmann, Jörg, 59872 Meschede (DE); Hohmann, Frank, 59581 Warstein (DE)
(74) Vertreter: Christophersen & Partner
(86) Internationale Anmeldenummer: PCT/EP2002/010180
(87) Internationale Veröffentlichungsnummer: WO 2003/024670

(56) Entgegenhaltungen:
- EP-A- 0 928 660
- DE-A- 2 846 668
- DE-A- 3 246 840
- DE-A- 4 014 897
- DE-A- 19 638 901
- US-A- 4 047 456
- US-A- 5 257 207

## Beschreibung

Die Erfindung betrifft eine hydraulische Gewindebolzenspannvorrichtung zum Anziehen und Lösen von großen Schrauben und ein Verfahren zum Anziehen derartiger Schrauben mittels der Gewindebolzenspannvorrichtung mit einem sich auf einem mittels eines Gewindebolzens und einer Mutter zu verspannenden Maschinenteil abstützenden Zylinder, wenigstens einem darin abgedichtet geführten, sich an einer auf ein Gewindeende des Gewindebolzens aufgeschraubten Gewindebuchse abstützenden, periodisch druckbeaufschlagten Kolben, einer Druckmittelzufuhr zur Gewindebolzenspannvorrichtung, einem Druckmittelanschluß an der Gewindebolzenspannvorrichtung, einem mit der Mutter formschlüssig verbundenen, im Zylinder angeordneten Nachstellring und einem mit dem Nachstellring in Antriebsverbindung stehenden Drehantrieb für den Nachstellring.

Eine derartig hydraulische Gewindebolzenspannvorrichtung ist in der DE 28 46 668 A1 beschrieben. Im einzelnen umfaßt die Vorrichtung eine Dehnungsmeßeinrichtung mit einer innerhalb einer Zentralbohrung der auszumessenden Schraube angeordneten Meßstange, wobei die Dehnungsmeßeinrichtung ein Gehäuse und ein relativ zu diesen verschiebbaren Taststift aufweist und mit Gehäuse und Taststift zwischen Referenzflächen der Schraube einerseits und der Meßstange andererseits angeschlossen ist und wobei die Relativverschiebung der Schraubenreferenzfläche in Bezug auf die Meßstangenreferenzfläche ein Maß für die Axialdehnung des Schraubenschaftes ist, der Taststift Bestandteil eines als induktiver Wandler ausgeführten Meßtasters ist und die an den Meßtaster angeschlossenen Versorgungs- und Meßleitungen zu einem vom Druckbehälter entfernt angeordneten, der Stromversorgung und Meßwertverarbeitung dienenden Steuerschrank geführt sind und ein der Herausführung der Meßstangen - Referenzfläche und dem Anschluß des Meßtastergehäuses dienendes Verlängerungsrohr mit der Meßstange mittels Schnellkupplung in Eingriff bringbar ist.

Mit dieser bekannten Vorrichtung läßt sich zwar ein ferngesteuertes Anziehen und Lösen von Schraubverbindungen durchführen, jedoch beruht die Überwachung des Anziehens und Lösens ausschließlich auf einer Längemessung, die eine innerhalb einer Zentralbohrung der auszumessenden Schraube angeordnete Meßstange erfordert. Dies bedingt einen erhöhten Aufwand bei der Herstellung der Schrauben und erfordert eine zusätzliche Dehnungsmeßeinrichtung in Verbindung mit der Schraubenspannvorrichtung.

Die in der DE 32 46 840 C2 beschriebene Vorrichtung zur automatischen Steuerung mehrerer Stehbolzenspannvorrichtungen erlaubt es, zahlreiche Stehbolzenspannvorrichtungen gleichzeitig durch eine zentrale Steuereinheit gesteuert, die die einzelnen Arbeitsgänge bezeichnenden Signale liefert, anzuziehen. Wenn ein bestimmter Arbeitsgang abgeschlossen ist, liefert jede Spannvorrichtung ein Ausgangssignal, das von der Steuereinheit abgegriffen wird, die daraufhin den nächsten Arbeitsgang bezeichnende Signale erzeugt. Die Steuereinheit enthält eine Folgeprozessoreinheit zur Erzeugung eines gemeinsamen Befehlssignal für die verschiedenen Spannvorrichtungen, so daß diese gleichzeitig angesteuert werden können, sowie eine Anzahl von Einstellern, die jeweils das Befehlssignal von der Folgeprozessoreinheit abnehmen und es nur zur betreffenden, zugeordneten Spannvorrichtung übertragen. Der Auslösezeitpunkt des Einstellers entspricht dem Zeitpunkt der Beendigung des Betriebes der zugeordneten Spannvorrichtung; er ist unabhängig von der anderen Spannvorrichtungen und der Folgeprozessoreinheit. Wenn eine der Spannvorrichtungen nicht arbeitet, liefert sie kein Ausgangssignal. Daraufhin werden die anderen Spannvorrichtung deaktiviert und die nicht arbeitenden Vorrichtung wird entweder von Hand betätigt oder instandgesetzt. Aus der DE 32 46 840 C2 sind keinerlei Angaben zur Messung der Schraubendehnung entnehmbar.

In der EP 0 928 660 A1 ist eine Gewindebolzenspannvorrichtung zum Anziehen und Lösen von Schrauben durch Erhitzen der Schraube mittels einer in eine zentrale Bohrung der Schraube eingesetzten Schraubenerwärmungsvorrichtung beschrieben. Sie umfaßt eine Mutterndrehvorrichtung zum Drehen einer auf die Schraube aufgeschraubten Mutter, einen Dehnungsanzeiger, um die thermische Verlängerung der Schraube zu messen und eine Steuereinheit zum Steuern des Antriebs der Mutterdrehvorrichtung sowie eine Energiezufuhr zu der Bolzenerwärmungsvorrichtung. Die Steuereinheit umfaßt wenigstens eine Einrichtung zum Betätigen der Mutterndrehvorrichtung im Sinne eines Anziehens und eines Lösens der Mutter sowie zum Unterbrechen der Energiezufuhr zur Schraubenerwärmungsvorrichtung, wenn ein gemessener Wert des Dehnungsanzeigers zu einer vorgegebenen Dehnung gelangt, sowie des weiteren noch eine Einrichtung, die im Falle des Anziehens der Mutter ein Drehmoment auf die Mutter aufgibt und die Mutterndrehvorrichtung anhält sowie die Energiezufuhr zur Schraubenerwärmungsvorrichtung unterbricht, wenn die Mutter um einen vorgegebenen Winkel gedreht wurde und eine Einrichtung, die im Fall, daß die Mutter gelöst werden soll, die Mutter mit einer vorgegebenen Anzahl Drehungen dreht, wenn die Mutter so gelockert ist, daß sie sich drehen läßt und dann sowohl die Mutterndrehvorrichtung anhält als auch die Energiezufuhr zur Bolzenerwärmungsvorrichtung unterbricht.

In der US 5,257,207 A ist eine hydraulische Gewindebolzenspannvorrichtung zum Anziehen und Lösen von Schrauben beschrieben, bei der eine Abstandsmessung zwischen den zu verspannenden Flanschen vorgenommen wird. Die Abstandsmessung erfolgt kontinuierlich mit Bezug auf die aufgebrachte Vorspannkraft. Hieraus wird in einem Steuergerät die Steigung der Kurve Abstand-Vorspannkraft ermittelt, um anhand eines bei Erreichen des Setzpunktes auftretenden Knicks zu bestimmen, wenn die volle Kompression einer Dichtung erreicht ist. Danach erfolgt nur noch eine elastische Verformung, insbesondere Dehnung des Bolzens bis zu einer vorgegebenen Vorspannung. Das Beidrehen der Mutter erfolgt von Hand ohne Drehwinkelmessung. Neben der fortwährend durchzuführenden Abstandsmessung muß auch ständig die aufgebrachte Vorspannkraft über den Druck in der hydraulischen Gewindebolzenspannvorrichtung gemessen werden.

Der Erfindung liegt das Problem zu Grunde, die bekannten hydraulischen Gewindebolzenspannvorrichtungen so weiterzuentwickeln, daß eine automatisierte Betätigung ohne vorherigen Rechenaufwand möglich ist, eine einfache Messung der Schraubendehnung durch an der hydraulischen Gewindebolzenspannvorrichtung vorhandene Einrichtungen ermöglicht wird und den Spannvorgang des jeweiligen Gewindebolzens zu beschleunigen.

Ausgehend von dieser Problemstellung wird eine hydraulische Gewindebolzenspannvorrichtung, die aus einem sich auf einem mittels eines Gewindebolzens und einer Mutter zu verspannenden Maschinenteil abstützenden Zylinder, wenigstens einem darin abgedichtet geführten, sich an einer am Gewindeende des Gewindebolzens aufgeschraubten Gewindebuchse abstützenden, periodisch druckbeaufschlagten Kolben, einer Druckmittelzufuhr zur Gewindebolzenspannvorrichtung, einem Druckmittelanschluß an der Gewindebolzenspannvortichtung, einem mit der Mutter formschlüssig verbundenen, im Zylinder angeordneten Nachstellring, einem mit dem Nachstellring in Antriebsverbindung stehenden Drehantrieb für den Nachstellring, dessen Drehmoment so einstellbar ist, daß er die Mutter bis zum spielfreien Setzen aller durch den Gewindebolzen zu spannenden Bauelemente anzieht und dann stillsteht, einem Drehwinkelmeßgeber am Drehantrieb, der sich bei Erreichen des spielfreien Setzens (Stillstand des Drehantriebs) auf Null setzen läßt, einer Steuereinrichtung zum Ansteuern der Druckmittelzufuhr zur Gewindebolzenspannvorrichtung und der gleichzeitigen Drehung des Drehantriebs, einer Eingabevorrichtung zum Eingeben der Gewindesteigung des Gewindebolzens und der Soll-Dehnung oder Soll-Vorspannkraft, einer Rechnereinrichtung zum Umrechnen des mittels des Drehwinkelmeßgebers gemessenen Mutterndrehwinkels in die durch die Gewindebolzenspannvorrichtung bewirkte Dehnung des Gewindebolzens und einer Abschaltvorrichtung für die Druckmittelzufuhr, die die Druckmittelbeaufschlagung bei Erreichen eines einer vorgegebenen Soll-Dehnung oder Soll-Vorspannkraft entsprechenden Mutterndrehwinkels unterbricht, besteht.

Der hydraulisch, pneumatisch oder elektrisch angetriebene Drehantrieb erlaubt es, das Beidrehen der Mutter bis zum spielfreien Setzen aller durch den Gewindebolzen zu spannenden Bauelemente, zu beschleunigen. Der Drehwinkelmeßgeber liefert die Meßwerte an die Rechnereinrichtung, die aus der Gewindesteigung des Gewindebolzens direkt die durch die Gewindebolzenspannvorrichtung bewirkte Dehnung des Gewindebolzens aus dem Mutterndrehwinkel berechnet, so daß eine Meßuhr zum Messen des Kolbenweges der Gewindebolzenspannvorrichtung überflüssig ist

Mittels einer Anzeigevorrichtung läßt sich die sich aus dem gemessenen Mutterndrehwinkel ergebende Dehnung des Gewindebolzens direkt anzeigen.

Wenn zusätzlich eine Eingabevorrichtung für den Durchmesser oder den Querschnitt des Gewindebolzens vorgesehen ist, läßt sich die Rechnereinrichtung so ausgestalten, daß sie den mittels des Drehwinkelmeßgebers gemessenen Mutterndrehwinkel in die durch die Gewindebolzenspannvorrichtung bewirkte Vorspannkraft des Gewindebolzens umrechnet, die sich in der Anzeigevorrichtung anzeigen läßt.

Wenn die Soll-Dehnung oder die Soll-Vorspannkraft des Gewindebolzens mittels einer Eingabevorrichtung in die Rechnereinrichtung eingegeben wird, läßt sich die Druckbeaufschlagung der Gewindebolzenspannvorrichtung mittels einer Abschaltvorrichtung automatisch unterbrechen, wenn die Soll-Dehnung oder die Soll-Vorspannkraft des Gewindebolzens erreicht ist.

Vorzugsweise kann als Drehantrieb ein elektrischer Getriebemotor eingesetzt werden, der sich besonders vorteilhaft als elektrischer Schrittmotor ausbilden läßt, der gleichzeitig den Drehwinkelmeßgeber bildet.

Dieser Drehantrieb läßt sich so ausbilden, daß sich sein Drehmoment so einstellen läßt, daß er die Mutter bis zum spielfreichen Setzen aller durch den Gewindebolzen zu spannenden Bauelemente anzieht und dabei eine derartige Vorspannung auf den Gewindebolzen aufbringt, daß keine Setzverluste entstehen. Wenn dann die hydraulische Gewindebolzenvorrichtung betätigt wird und den Gewindebolzen dehnt, hebt die Mutter von den zu spannenden Bauelementen ab und der Drehantrieb kann die Mutter weiterdrehen bis die eingestellte Soll-Dehnung des Gewindebolzens erreicht ist, woraufhin die Druckmittelzufuhr zur hydraulischen Gewindebolzenspannvorrichtung unterbrochen wird.

Gemäß einer anderen Ausführungsform kann die Abschaltvorrichtung so eingerichtet sein, daß die Gewindebolzenspannvorrichtung zunächst zum spielfreien Setzen aller durch den Gewindebolzen zu spannenden Bauelemente mit etwa 5 % des Maximaldrucks beaufschlagt wird, wonach der Drehantrieb die Mutter bis zur Anlage an die durch den Gewindebolzen zu spannenden Bauelemente dreht. hierbei übernimmt die Gewindebolzenspannvorrichtung die Aufgabe, alle durch den Gewindebolzen zu spannenden Bauelemente bis zum spielfreien Setzen vorzuspannen, bevor der eigentliche Spannvorgang und das Beidrehen der Mutter durchgeführt werden.

Mit der erfindungsgemäßen hydraulischen Gewindebolzenspannvorrichtung läßt sich ein Verfahren zum Anziehen von großen Schrauben durchführen, das die Schritte umfaßt:

Eingeben der Gewindesteigung des Gewindebolzens in die Eingabevorrichtung, Eingeben der Soll-Dehnung des Gewindebolzens in die Eingabevorrichtung, Einschalten des Drehantriebs zum Beidrehen der Mutter bis zum Stillstand des Drehantriebs, Auf- Null-Setzen des Drehwinkelmeßgebers, Einschalten der Druckbeaufschlagung der Gewindebolzenspannvorrichtung, Weiterdrehen der Mutter mittels des Drehantriebs und Abschalten der Druckbeaufschlagung wenn die Soll-Dehnung des Gewindebolzens erreicht ist.

Wenn statt der Soll-Dehnung die Soll-Vorspannung des Gewindebolzens vorgegeben wird, läßt sich das Verfahren so durchführen, daß zusätzlich der Gewindebolzendurchmesser oder - querschnitt in die Eingabevorrichtung eingegeben werden. Die Rechnervorrichtung berechnet dann aus der Gewindesteigung, dem Gewindebolzendurchmesser oder -querschnitt und dem Mutterndrehwinkel die Ist-Vorspannung und schaltet die Druckbeaufschlagung der Gewindebolzenspannvorrichtung ab, wenn die Soll-Vorspannung erreicht ist.

Diese Verfahrensvarianten können den zusätzlichen Schritt nach der Eingabe umfassen, die Gewindebolzenspannvorrichtung zunächst mit einem Druck zu beaufschlagen, der etwa 5 % des Maximaldrucks entspricht, um ein spielfreies Setzen aller durch den Gewindebolzen zu spannenden Bandelemente zu erreichen, wonach die weiteren Schritte, nämlich Einschalten, Auf Null-Setzen, Einschalten, Weiterdrehen, Abschalten, durchgeführt werden.

Das Spannen von Gewindebolzen läßt sich mit der erfindungsgemäßen Gewindebolzenspannvorrichtung und dem damit verbundenen Verfahren automatisch durchführen und erfordert nur die Eingabe der Gewindesteigung des Gewindebolzens sowie ggf. des Gewindebolzendurchmessers- oder -querschnitts und die Eingabe der Soll-Dehnung oder der Soll-Vorspannung des Gewindebolzens in die Eingabevorrichtungen. Nach Einschalten der Gewindebolzenspannvorrichtung läuft der Spannvorgang vollautomatisch ab.

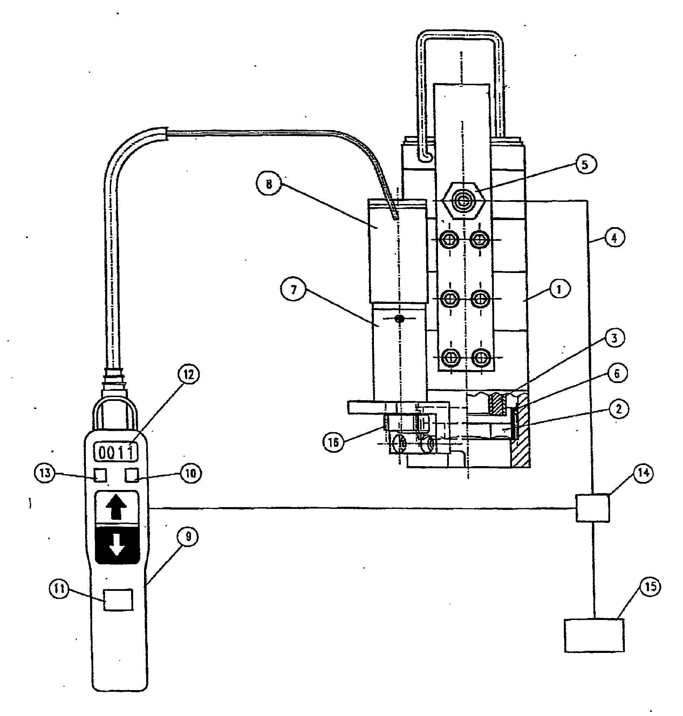

Die Erfindung wird nachstehend anhand eines in der Zeichnung dargestellten Ausführungsbeispiels des näheren erläutert.

Eine hydraulische Gewindebolzenspannvorrichtung 1 ist schematisch dargestellt. Hinsichtlich der Funktionsweise und des inneren Aufbaus der Gewindebolzenspannvorrichtung 1 wird auf die DE 196 38 901 A1 derselben Anmelder verwiesen.

Zum Spannen eines nicht dargestellten Gewindebolzens wird die Gewindebolzenspannvorrichtung über eine Mutter 2, die auf den Gewindebolzen aufgeschraubt ist, gesetzt, wobei ein mit einem Innensechskant versehener Nachstellring 6 die Mutter 2 formschlüssig übergreift. Eine Gewindebuchse 3, die mit einem Spannkolben in der Gewindebolzenspannvorrichtung 1 verbunden ist wird auf das überstehende Gewindeende des Gewindebolzens geschraubt, wonach die Gewindebolzenspannvorrichtung 1 einsatzbereit ist. Ein Hydraulikdruckerzeuger 15 ist über eine Abschaltvorrichtung 14, eine Druckmittelzufuhr 4 und einen Druckmittelanschluß 5 mit der Gewindebolzenspannvornchtung vorbunden.

Der Nachstellring 6 ist mit einer Außenverzahnung versehen, in die ein Zahnrad 16an einen als elektrischer Getriebemotor ausgebildeten Drehantrieb 7 eingreift. Mit dem Drehantrieb 7 ist ein Drehwinkelmeßgeber 8 verbunden, der den Drehwinkel des Drehantriebs 7 und damit über die Antriebsverbindung 16 zum Nachstellring 6 den Drehwinkel der Mutter 2 aufnimmt.

Wenn der Drehantrieb 7 als elektrischer Schrittmotor ausgebildet ist, stellt er gleichzeitig den Drehwinkelmeßgeber 8 dar.

Eine Steuereinrichtung 9 ist mit dem Drehantrieb 7 und der Abschaltvorrichtung 14 verbunden. Die Steuereinrichtung 9 weist eine Eingabevorrichtung 10 für die Gewindesteigung und eine Eingabevorrichtung 13 für die Soll-Dehnung des Gewindebolzens auf

Die Eingabevorrichtung 10 für die Gewindesteigung kann zusätzlich eine Eingabemöglichkeit für den Gewindebolzendurchmesser oder -querschnitt aufweisen. In diesem Fall wird in die Eingabevorrichtung 13 die Soll-Vorspannkraft des Gewindebolzens eingegeben.

Des weiteren ist eine Rechnereinrichtung 11 vorhanden, die beispielsweise in die Steuereinrichtung integriert sein kann, die aus der eingegebenen Gewindesteigung und dem Drehwinkel der Mutter 2 die Dehnung des Gewindebolzens bei Betätigung der Gewindebolzenspannvorrichtung 1 berechnet und in einer Anzeigevorrichtung 12 anzeigt.

Wird neben der Gewindesteigung auch der Gewindebolzendurchmesser oder -querschnitt in die Eingabevorrichtung 10 eingegeben, kann die Rechnereinrichtung 11 daraus und aus dem Drehwinkel der Mutter 2 die Ist-Vorspannkraft des Gewindebolzens berechnen und in der Anzeigevorrichtung 12 anzeigen.

Zum Spannen eines Gewindebolzens wird die Gewindebolzenspannvorrichtung 1 in der vorgeschriebenen Weise auf einen mit einer Mutter 2 versehenen Bolzen aufgesetzt, und die Gewindesteigung sowie die Soll-Dehnung werden in die Eingabevorrichtung 10, 13 eingegeben.

Durch erstes Betätigen des Drehantriebs 7 wird die Mutter 2 soweit angezogen, daß ein spielfreies Setzen aller durch den Gewindebolzen zu spannenden Bauelemente erreicht wird. Da das vom Drehantrieb 7 aufgebrachte Drehmoment nur so groß ist, daß das spielfreie Setzen erreicht wird, kommt der Drehantrieb 7 zum Stillstand, und bringt nur die Vorspannung auf den Gewindebolzen auf, die zum spielfreien Setzen aller durch den Gewindebolzen zu spannenden Bauelemente notwendig ist. In dieser Stellung wird der Drehwinkelmeßgeber 8 auf Null gesetzt und die Abschaltvorrichtung 14, die als elektrisch angesteuertes Servoventil ausgebildet ist, wird mittels der Steuereinrichtung 9 geöffnet, so daß sich der vom Hydraulikdruckerzeuger 15 erzeugte Hydraulikdruck über die Druckmittelzufuhr 4 und den Druckmittelanschluß 5 in die Gewindebolzenspannvorrichtung 1 fortpflanzt und eine Dehnung des Gewindebolzens bewirkt. Der Drehantrieb 7 dreht die Mutter 2 während der Dehnung des Gewindebolzes durch die Gewindebolzenspannvorrichtung 1 stets so weit weiter, daß sie in Anlage an die durch den Gewindebolzen zu spannenden Bauelemente bleibt. Somit ist die Drehung der Mutter 2 direkt proportional zur Dehnung und der Vorspannung des Gewindebolzens. Die Drehung der Mutter 2 wird durch den Drehwinkelmeßgeber 8 aufgenommen, an die Steuereinrichtung 9 geleitet, die eine automatische Unterbrechung der Druckbeaufschlagung der Gewindebolzenspannvorrichtung 1 durch Schließen der Abschaltvorrichtung 14 bewirkt, wenn die eingegebene Soll-Dehnung oder Soll-Vorspannung des Gewindebolzens erreicht ist.

Der Spannvorgang ist damit beendet, und es wird eine Druckentlastung der Gewindebolzenspannvorrichtung vorgenommen, die sich danach vom gespannten Gewindebolzen lösen und auf einen weiteren zu spannenden Gewindebolzen umsetzen läßt.

Statt das spielfreie Setzen aller durch den Gewindebolzen zu spannenden Bauelemente durch das Beidrehen der Mutter mittels des Drehantriebs zu bewirken, läßt sich dies auch mittels der Gewindebolzenspannvorrichtung erreichen, wenn diese zunächst mit etwa 5 % des Maximaldrucks beaufschlagt wird, die Mutter beigedreht wird und erst danach der eigentliche Spannvorgang durchgeführt wird.

## Patentansprüche

1. Hydraulische Gewindebolzenspannvotrichtung (1) zum Anziehen und Lösen von großen Schrauben mit
- einem sich auf einem mittels eines Gewindebolzens und einer Mutter (2) zu verspannenden Maschinenteil abstützenden Zylinder,
- wenigstens einem darin abgedichtet geführten, sich an einer am Gewindeende des Gewindebolzens aufgeschraubten Gewindebuchse (3) abstützenden, periodisch druckbeaufschlagten Kolben,
- einer Druckmittelzufuhr (4) zur Gewindebolzenspannvorrichtung (1),
- einem Druckmittelanschluß (5) an der Gewindebolzenspannvorrichtung (1),
- einem mit der Mutter (2) formschlüssig verbundenen, im Zylinder angeordneten Nachstellring (6),
- einem mit dem Nachstellring (6) in Antriebsverbindung (16) stehenden Drehantrieb (7) für den Nachstellring (6), **dadurch gekennzeichnet, daß** die hydraulische Gewindebolzenspannvorrichtung des weiteren folgende Merkmale aufweist,
- einen Drehwinkelmeßgeber (8) am Drehantrieb (7), der sich bei Erreichen des spielfreien Setzens bei Stillstand des Drehantriebs auf Null setzen läßt,
- eine Steuereinrichtung (9) zum Ansteuern der Druckmittelzufuhr (4) zur Gewindebolzenspannvorrichtung (1) und der gleichzeitigen Drehung des Drehantriebs (7),
- eine Eingabevorrichtung (10) zum Eingeben der Gewindesteigung des Gewindebolzens und der Soll-Dehnung oder Soll-Vorspannkraft,
- eine Rechnereinrichtung (11) zum Umrechnen des mittels des Drehwinkelmeßgebers (8) gemessenen Mutterndrehwinkels in die durch die Gewindebolzenspannvorrichtung (1) bewirkte Dehnung des Gewindebolzens und
- eine Abschaltvorrichtung (14) für die Druckmittelzufuhr (4), die die Druckmittelbeaufschlagung bei Erreichen eines einer vorgegebenen Soll-Dehnung oder Soll-Vorspannkraft entsprechenden Mutterndrehwinkels unterbricht
- und das Drehmoment des Drehantriebs (7) so einstellbar ist, daß er die Mutter (2) bis zum spielfreiensetzen aller durch den Gewindebolzen zu spannenden Bauelement anzieht und dass stillsteht.

2. Hydraulische Gewindebolzenspannvorrichtung nach Anspruch 1 mit einer Anzeigevorrichtung (12) für die sich aus dem gemessenen Mutterndrehwinkel ergebenden Dehnung des Gewindebolzens.

3. Hydraulische Gewindebolzenspannvorrichtung nach Anspruch 1 mit einer Eingabevorrichtung (10) zum Eingeben des Durchmessers oder Querschnitts des Gewindebolzens und einer Ausgestaltung der Rechnereinrichtung. (11) zum Umrechnen der mittels des Drehwinkelmeßgebers (8) gemessenen Mutterndrehwinkels in die durch die Gewindebolzenspannvorrichtung (1) bewirkte Vorspannkraft des Gewindebolzens.

4. Hydraulische Gewindebolzenspannvorrichtung nach Anspruch 3 mit einer Anzeigevorrichtung (12) für die sich aus dem gemessenen Mutterndrehwinkel ergebende Vorspannkraft des Gewindebolzens.

5. Hydraulische Gewindebolzenspannvorrichtung nach einem der Ansprüche 1 bis 4, mit einem elektrischen Getriebemotor als Drehantrieb (7).

6. Hydraulische Gewindebolzenspannvorrichtung nach Anspruch 5 mit einem elektrischen Schrittmotor als Drehantrieb (7) und Drehwinkelmeßgeber (8).

7. Hydraulische Gewindebolzenspannvorrichtung nach einem der Ansprüche 1 bis 6, bei der die Abschaltvorrichtung (14) so angesteuert ist, daß die Gewindebolzenspannvorrichtung (1) zunächst zum spielfreien Setzen aller durch den Gewindebolzen zu spannenden Bauelemente mit etwa 5 % des Maximaldrucks beaufschlagt wird, wonach der Drehantrieb (7) die Mutter (2) bis zur Anlage an die durch den Gewindebolzen zu spannenden Bauelemente dreht und dann stillsteht.

8. Verfahren zum Anziehen großer Schrauben mittels einer hydraulischen Gewindebolzenspannvorrichtung (1) nach einem der Ansprüche 1 bis 7 mit den Schritten:
- Eingeben der Gewindesteigung des Gewindebolzens in die Eingabevorrichtung (10),
- Eingeben der Soll-Dehnung des Gewindebolzens (2) in die Eingabevorrichtung (13),
- Einschalten des Drehantriebs (7) zum Beidrehen der Mutter (2) bis zum Stillstand des Drehantriebs (7),
- Auf-Null-Setzen des Drehwinkelmeßgebers (8),
- Einschalten der Druckbeaufschlagung der Gewindebolzenspannvorrichtung (1),
- Weiterdrehen der Mutter (3) mittels des Drehantriebs (7) und
- Abschalten der Druckbeaufschlagung, wenn die Soll-Dehnung des Gewindebolzens erreicht ist.

9. Verfahren zum Anziehen großer Schrauben mittels einer hydraulischen Gewindebolzenspannvorrichtung (1) nach einem der Ansprüche 1 bis 7 mit den Schritten:
- Eingeben der Gewindesteigung des Gewindebolzens in die Eingabevorrichtung (10),
- Eingeben des Gewindebolzendurchmessers oder -querschnitts in die Eingabevorrichtung (10),
- Eingeben der Soll-Vorspannung des Gewindebolzens (2) in die Eingabevorrichtung (13),
- Einschalten des Drehantriebs (7) zum Beidrehen der Mutter (2) bis zum Stillstand des Drehantriebs (7),
- Auf-Null-Setzen des Drehwinkelmeßgebers (8),
- Einschalten der Druckbeaufschlagung der Gewindebolzenspannvorrichtung (1),
- Weiterdrehen der Mutter (3) mittels des Drehantriebs (7) und
- Abschalten der Druckbeaufschlagung, wenn die Soll-Vorspannung des Gewindebolzens erreicht ist.

10. Verfahren nach Anspruch 8 oder 9 mit dem zusätzlichen Schritt nach der Eingabe:
- Einschalten der Gewindebolzenspannvorrichtung (1) und Druckbeaufschlagung mit etwa 5 % des Maximaldrucks, um ein spielfreies Setzen aller durch den Gewindebolzen zu spannenden Bauelemente zu erreichen.

## Claims

1. Hydraulic threaded bolt tensioning device (1) for tightening and loosening large bolts, comprising
- a cylinder which is supported on a machine part that is to be clamped by means of a threaded bolt and a nut (2),
- at least one piston which is guided in a sealed manner therein and is supported against a threaded bushing (3) screwed onto the threaded end of the threaded bolt, which piston is periodically acted upon by pressure,
- a pressure medium supply (4) to the threaded bolt tensioning device (1),
- a pressure medium connection (5) on the threaded bolt tensioning device (1),
- an adjusting ring (6) which is connected in a form-fitting manner to the nut (2) and is arranged in the cylinder,
- a rotary drive (7) for the adjusting ring (6), which rotary drive is in drive connection (16) with the adjusting ring (6),
**characterised in that** the hydraulic threaded bolt tensioning device furthermore has the following features:
- a rotation angle sensor (8) on the rotary drive (7), which can be set to zero when the play-free setting is reached when the rotary drive is at a standstill,
- a control device (9) for controlling the pressure medium supply (4) to the threaded bolt tensioning device (1) and for simultaneously rotating the rotary drive (7),
- an input device (10) for inputting the pitch of the threaded bolt and the desired strain or desired prestressing force,
- a computer device (11) for converting the rotation angle of the nut, as measured by means of the rotation angle sensor (8), into the strain of the threaded bolt brought about by the threaded bolt tensioning device (1),
- a shut-off device (14) for the pressure medium supply (4), which stops the supply of pressure medium when a rotation angle of the nut is reached which corresponds to a predefined desired strain or desired prestressing force, and
- the torque of the rotary drive (7) can be set such that it tightens the nut (2) until the point of play-free setting of all the components to be clamped by the threaded bolt is reached, and then stops.

2. Hydraulic threaded bolt tensioning device according to claim 1, comprising a display device (12) for displaying the strain of the threaded bolt resulting from the measured rotation angle of the nut.

3. Hydraulic threaded bolt tensioning device according to claim 1, comprising an input device (10) for inputting the diameter or cross section of the threaded bolt, and a configuration of the computer device (11) for converting the rotation angle of the nut, as measured by means of the rotation angle sensor (8), into the prestressing force of the threaded bolt brought about by the threaded bolt tensioning device (1).

4. Hydraulic threaded bolt tensioning device according to claim 3, comprising a display device (12) for displaying the prestressing force of the threaded bolt resulting from the measured rotation angle of the nut.

5. Hydraulic threaded bolt tensioning device according to one of claims 1 to 4, comprising a geared electric motor as the rotary drive (7).

6. Hydraulic threaded bolt tensioning device according to claim 5, comprising an electric stepping motor as the rotary drive (7) and the rotation angle sensor (8).

7. Hydraulic threaded bolt tensioning device according to one of claims 1 to 6, in which the shut-off device (14) is controlled in such a way that the threaded bolt tensioning device (1) is initially acted upon by approximately 5% of the maximum pressure in order to achieve the play-free setting of all the components to be clamped by the threaded bolt, whereupon the rotary drive (7) rotates the nut (2) until it bears against the components to be clamped by the threaded bolt and then stops.

8. Method for tightening large bolts by means of a hydraulic threaded bolt tensioning device (1) according to one of claims 1 to 7, comprising the steps of:
- inputting the thread pitch of the threaded bolt into the input device (10),
- inputting the desired strain of the threaded bolt (2) into the input device (13),
- switching on the rotary drive (7) in order to rotate the nut (2) until the rotary drive (7) stops,
- setting the rotation angle sensor (8) to zero,
- switching on the pressurisation of the threaded bolt tensioning device (1),
- further rotating the nut (3) by means of the rotary drive (7), and
- switching off the pressurisation when the desired strain of the threaded bolt is reached.

9. Method for tightening large bolts by means of a hydraulic threaded bolt tensioning device (1) according to one of claims 1 to 7, comprising the steps of:
- inputting the thread pitch of the threaded bolt into the input device (10),
- inputting the threaded bolt diameter or cross section into the input device (10),
- inputting the desired prestress of the threaded bolt (2) into the input device (13),
- switching on the rotary drive (7) in order to rotate the nut (2) until the rotary drive (7) stops,
- setting the rotation angle sensor (8) to zero,
- switching on the pressurisation of the threaded bolt tensioning device (1),
- further rotating the nut (3) by means of the rotary drive (7), and
- switching off the pressurisation when the desired prestress of the threaded bolt is reached.

10. Method according to claim 8 or 9, comprising the additional step, after the inputting, of:
- switching on the threaded bolt tensioning device (1) and pressurising with approximately 5% of the maximum pressure in order to achieve a play-free setting of all the components to be clamped by the threaded bolt.

## Revendications

1. Dispositif de serrage hydraulique à boulon fileté (1) pour serrer et desserrer de grandes vis comportant
- un cylindre s'appuyant sur une pièce mécanique à serrer à l'aide d'un boulon fileté et d'un écrou (2),
- au moins un piston périodiquement sous pression, guidé de manière étanche à l'intérieur, s'appuyant sur une douille taraudée (3) vissée au niveau de l'extrémité filetée du boulon fileté,
- une alimentation en fluide de pression (4) pour le dispositif de serrage à boulon fileté (1),
- un raccord de fluide de pression (5) au niveau du dispositif de serrage à boulon fileté (1),
- un anneau de réglage (6) agencé dans le cylindre, relié par correspondance de forme avec l'écrou (2),
- un entraînement rotatif (7) pour l'anneau de réglage (6) en liaison d'entraînement (16) avec l'anneau de réglage (6), **caractérisé en ce que** le dispositif de serrage hydraulique à boulon fileté présente en outre les caractéristiques suivantes :
- un élément de mesure d'angle de rotation (8) au niveau de l'entraînement rotatif (7), qui peut être mis à zéro lorsque la pose sans jeu est obtenue à l'arrêt de l'entraînement rotatif,
- un dispositif de commande (9) pour la commande de l'alimentation en fluide de pression (4) pour le dispositif de serrage à boulon fileté (1) et de la rotation simultanée de l'entraînement rotatif (7),
- un dispositif de saisie (10) pour la saisie du pas de filetage du boulon fileté et de l'extension de consigne ou de l'effort de précontrainte de consigne,
- un dispositif de calcul (11) pour la conversion de l'angle de rotation des écrous mesuré à l'aide d'un élément de mesure d'angle de rotation (8) en extension du boulon fileté provoquée par le dispositif de serrage à boulon fileté (1) et
- un dispositif de mise hors circuit (14) pour l'alimentation en fluide de pression (4) qui interrompt l'alimentation en fluide de pression lorsqu'un angle de rotation des écrous correspondant à une extension de consigne ou à un effort de précontrainte prédéfini est atteint,
- et le couple de l'entraînement rotatif (7) peut être réglé de sorte qu'il serre l'écrou (2) jusqu'à la pose sans jeu de tous les composants à serrer par le boulon fileté puis s'arrête.

2. Dispositif de serrage hydraulique à boulon fileté selon la revendication 1, avec un dispositif d'affichage (12) pour l'extension du boulon fileté résultant de l'angle de rotation des écrous mesuré.

3. Dispositif de serrage hydraulique à boulon fileté selon la revendication 1, avec un dispositif de saisie (10) pour la saisie du diamètre ou de la section transversale du boulon fileté et une configuration du dispositif de calcul (11) pour la conversion de l'angle de rotation des écrous mesuré à l'aide de l'élément de mesure d'angle de rotation (8) en effort de précontrainte du boulon fileté provoqué par le dispositif de serrage à boulon fileté (1).

4. Dispositif de serrage hydraulique à boulon fileté selon la revendication 3, avec un dispositif d'affichage (12) pour l'effort de précontrainte du boulon fileté résultant de l'angle de rotation des écrous mesuré.

5. Dispositif de serrage hydraulique à boulon fileté selon l'une quelconque des revendications 1 à 4, avec un motoréducteur électrique comme entraînement rotatif (7).

6. Dispositif de serrage hydraulique à boulon fileté selon la revendication 5, avec un moteur pas à pas électrique comme entraînement rotatif (7) et élément de mesure d'angle de rotation (8).

7. Dispositif de serrage hydraulique à boulon fileté selon l'une quelconque des revendications 1 à 6, sur lequel le dispositif de mise hors circuit (14) est commandé de sorte que le dispositif de serrage à boulon fileté
(1) est d'abord alimenté avec environ 5 % de la pression maximale pour la pose sans jeu de tous les composants à serrer par le boulon fileté, après quoi l'entraînement rotatif (7) tourne l'écrou (2) jusqu'à l'appui sur les composants à serrer par le boulon fileté puis s'arrête.

8. Procédé de serrage de grandes vis au moyen d'un dispositif de serrage hydraulique à boulon fileté (1) selon l'une quelconque des revendications 1 à 7 comportant les étapes de :
- saisie du pas de filetage du boulon fileté dans le dispositif de saisie (10),
- saisie de l'extension de consigne du boulon fileté (2) dans le dispositif de saisie (13),
- mise en circuit de l'entraînement rotatif (7) pour la rotation de l'écrou (2) jusqu'à l'arrêt de l'entraînement rotatif (7),
- mise à zéro de l'élément de mesure d'angle de rotation (8),
- mise en marche de l'alimentation en pression du dispositif de serrage à boulon fileté (1),
- poursuite de la rotation de l'écrou (3) au moyen de l'entraînement rotatif (7) et
- mise hors circuit de l'alimentation en pression lorsque l'extension de consigne du boulon fileté est atteinte.

9. Procédé de serrage de grandes vis au moyen d'un dispositif de serrage hydraulique à boulon fileté (1) selon l'une quelconque des revendications 1 à 7 comportant les étapes de :
- saisie du pas de filetage du boulon fileté dans le dispositif de saisie (10),
- saisie du diamètre ou de la section transversale du boulon fileté dans le dispositif de saisie (10),
- saisie de la précontrainte de consigne du boulon fileté (2) dans le dispositif de saisie (13),
- mise en circuit de l'entraînement rotatif (7) pour la rotation de l'écrou (2) jusqu'à l'arrêt de l'entraînement rotatif (7),
- mise à zéro de l'élément de mesure d'angle de rotation (8),
- mise en marche de l'alimentation en pression du dispositif de serrage à boulon fileté (1),
- poursuite de la rotation de l'écrou (3) au moyen de l'entraînement rotatif (7) et
- mise hors circuit de l'alimentation en pression lorsque l'extension de consigne du boulon fileté est atteinte.

10. Procédé selon la revendication 8 ou 9 avec l'étape supplémentaire après la saisie :
- mise en marche du dispositif de serrage à boulon fileté (1) et alimentation en pression avec environ 5 % de la pression maximale pour obtenir une pose sans jeu de tous les composants à serrer par le boulon fileté.
